# EUROPÄISCHE PATENTANMELDUNG

(11) **EP 3 836 323 A1**
(43) Veröffentlichungstag der Anmeldung: **16.06.2021**
(21) Anmeldenummer: 19216061.2
(22) Anmeldetag: 13.12.2019
(51) Int. Cl.: H02G 3/00

(54) **AUSLEGER UND MONTAGEVORRICHTUNG MIT EINEM AUSLEGER**

(71) Anmelder: Lanz Oensingen AG, 4702 Oensingen (CH)
(72) Erfinder: GERSTER, Alexander, 8006 Zürich (DE)
(74) Vertreter: Rutz & Partner

(57) **Zusammenfassung**

Der Ausleger (1), der mit einem Stützelement (2) eine Montagevorrichtung (10) bildet, umfasst einen Tragarm (11) mit einer Auflageplatte (112), an die an einer oder beiden Seiten eine abgewinkelte Seitenplatte (111) anschliesst, und ein Kopfstück (12) mit einer Kopfplatte (124), die eine dem Tragarm (111) zugewandte Frontseite und eine von Tragarm (111) abgewandte Rückseite aufweist. Erfindungsgemäss ist vorgesehen, dass das Kopfstück (12) und der Tragarm (11) an den einander zugewandten Enden erste und zweite Gelenkelemente (115; 1150 bzw. 121; 1241) aufweisen, welche zur Bildung eines Drehgelenks miteinander verbunden oder miteinander verbindbar sind, sodass der Tragarm (11) gegenüber dem Kopfstück (12) drehbar ist und dass die einseitig an der Auflageplatte (112) vorgesehene Seitenplatte (111) oder die beidseitig an der Auflageplatte (112) vorgesehenen Seitenplatten (111) am proximalen Ende des Tragarms (11) je ein Anschlagelement (1111) aufweisen, welches mit dem Tragarm (11) nach der Montage des Auslegers (1) gegen das Stützelement (2) oder gegen die Kopfplatte (124) drehbar und dort abstützbar ist.

## Beschreibung

Die Erfindung betrifft einen zur Montage an einem Stützelement vorgesehenen Ausleger sowie eine Montagevorrichtung mit einem solchen Ausleger.

Gattungsgemässe Ausleger werden in der Installationstechnik verwendet und dienen dem Tragen von Lasten, wie Kabelkanälen, Kabelpritschen und Kabelleitern sowie damit gehaltenen Medienleitungen, wie elektrischen Leitungen, Wasserrohren, und dergleichen. Die Montagevorrichtungen umfassen ein Stützelement, z.B. eine Deckenstütze, an der einseitig oder auf einander gegenüberliegenden Seiten wenigstens ein Ausleger montiert wird.

, EP1155638A1, offenbart einen Ausleger, der lösbar an einer Deckenstütze montierbar ist, die dazu mit Montageöffnungen versehen ist. Der Ausleger besteht aus einem der Aufnahme der Last dienenden Tragarm und einem damit verbundenen Kopfstück, das ebenfalls eine Montageöffnung aufweist. Die Montage des Auslegers erfolgt anhand von Verbindungselementen, wie Schrauben oder Haken, die in die Montageöffnungen eingeführt werden. Der Ausleger kann daher an der Deckenstütze in wählbarer Höhe sowie, je nach dem Profil der Deckenstütze (z.B. Vierkant-Hohlprofil oder sogenanntes C-Profil), in eine wählbare Richtung weisend, montiert werden. Nachteilig bei diesem Ausleger ist, dass dessen Herstellung einen erheblichen Aufwand verursacht. Der Tragarm wird nämlich an das zugehörige Montageteil angeschweisst, was nicht nur mit einem hohen Aufwand verbunden ist, sondern auch weitere Nachteile nach sich zieht.

Einerseits ist zu beachten, dass die Ausleger oft hohe Lasten tragen und daher starken mechanischen Belastungen ausgesetzt sind. Mangelhafte Schweissstellen können aufreissen, wonach die Last nicht mehr sicher gehalten ist.

Nachteilig sind ferner Materialschäden, die durch das Schweissen hervorgerufen werden und die eine aufwändige Nachbehandlung erfordern. Bei der Verwendung von verzinktem Metall wird durch das Schweissen die Schutzschicht aus Zink in einem weiten Bereich zerstört, weshalb eine teure Nachbehandlung erforderlich ist. Konstruktionsteile, die z.B. nach dem Sendzimir-Verfahren bearbeitet wurden, weisen nach dem Schweissen oft in Zonen, in denen die Last einwirkt, Mängel auf. Sofern diese Mängel nicht behoben werden, ist nach einer relativ kurzen Betriebsdauer mit Oxidationsschäden zu rechnen, welche die Tragfähigkeit der Ausleger beeinträchtigen.

, EP2290772A1, offenbart einen Ausleger mit einem U-Profilförmigen Tragarm, der ein Mittelstück und beidseits senkrecht dazu geneigte Seitenstücke aufweist und der mit einem Kopfstück verbunden ist, das ein an einer vertikal ausgerichteten Stütze montierbares Mittelteil und damit verbundene Seitenteile mit Fusselementen aufweist, die sich über einen Teil der Länge des Tragarms erstrecken und an der Unterseite des Mittelstücks und am zugehörigen Seitenstück des Tragarms anliegen. Dieser Ausleger ist nur mit einem relativ grossen Aufwand herstellbar, da ein mehrfach gebogenes Kopfstück bereitzustellen und mit dem Tragarm zu verbinden ist. Ferner sind zahlreiche Verbindungsstellen erforderlich, die sich nach längerem Gebrauch des Auslegers als Schwachstellen erweisen können.

, EP1804354A2, offenbart einen Adapter zum Anschliessen eines Auslegers, der zur Auflage von Kabelrinnen oder Kabelleitern an einem Tragprofil dient, welches in regelmässigen Abständen Langlöcher aufweist. Der Ausleger weist stirnseitig an der dem Tragprofil zugewandten Seite eine Stirnplatte mit einer Durchbrechung auf. Der Adapter umfasst eine Platte, die auf einer Seite mit wenigstens einem ersten Haken in eine Längsöffnung des Trageprofils einhängbar ist und die auf der anderen Seite einen zweiten Haken aufweist, der in die Durchbrechung der Stirnplatte des Auslegers eingehängt werden kann. Nach der Installation des Auslegers und einer Kabelrinne sind der mit dem Ausleger verbundene zweite Haken des Adapters und die Stirnplatte des Auslegers hohen Zugkräften ausgesetzt, weshalb die eine sehr beschränkte Belastbarkeit resultiert. Der auf Zug belastete zweite Haken, der aus dem Adapter ausgeschnitten und ausgeformt ist, kann sich weiter verformen, wonach der Ausleger unter der Last abkippt. Zu beachten ist, dass bei der Installation von Kabelbahnen und Kabelrinnen oft sehr hohe Lasten auf die Ausleger einwirken. Dies z.B., wenn sich der Monteur auf die installierte Kabelbahn oder Kabelrinne abstützt. In solchen Fällen besteht selbst für den Monteur ein Sicherheitsrisiko. Weiterhin ist zu beachten, dass die Realisierung der Stirnplatte des Auslegers mit entsprechendem Aufwand verbunden ist. Eine separate Stirnplatte muss mit dem Ausleger verbunden, gegebenenfalls verschweisst, werden. Alternativ kann die Stirnplatte realisiert werden, indem Teile des Auslegers umgebogen werden, sodass sie sich gegebenenfalls überlappen. Auch diese Lösung ist mit entsprechendem Aufwand verbunden.

Der vorliegenden Erfindung liegt daher die Aufgabe zugrunde, einen verbesserten Ausleger und eine verbesserte Montagevorrichtung mit einem Ausleger zu schaffen.

Der Ausleger sowie die Montagevorrichtung mit dem Ausleger sollen einfach ausgestaltet sein und mit reduziertem Arbeitsaufwand in hoher Qualität hergestellt werden können.

Ausleger sollen besonders einfach ausgestaltet und mit nur einem Handgriff montierbar sein.

Durch vorteilhafte Dimensionierung der Montagevorrichtung bzw. des Auslegers sollen Kräfte der einwirkenden Last vorteilhaft auf die Vorrichtungsteile einwirken, sodass eine vergleichsweise hohe Belastbarkeit und Betriebssicherheit der Montagevorrichtung und des Auslegers resultiert.

Diese Aufgabe wird mit einem Ausleger und mit einer Montagevorrichtung mit einem Ausleger gelöst, welche die in Anspruch 1 bzw. 11 angegebenen Merkmale aufweisen. Vorteilhafte Ausgestaltungen der Erfindung sind in weiteren Ansprüchen angegeben.

Der Ausleger, der mit einem Stützelement eine Montagevorrichtung bildet, umfasst einen Tragarm mit einer Auflageplatte, an die an einer oder beiden Seiten eine abgewinkelte Seitenplatte anschliesst, und ein Kopfstück mit einer Kopfplatte, die eine dem Tragarm zugewandte Frontseite und eine von Tragarm abgewandte Rückseite aufweist.

Erfindungsgemäss ist vorgesehen, dass das Kopfstück und der Tragarm an den einander zugewandten Enden erste und zweite Gelenkelemente aufweisen, welche zur Bildung eines Drehgelenks miteinander verbunden oder miteinander verbindbar sind, sodass der Tragarm gegenüber dem Kopfstück drehbar ist und dass die einseitig an der Auflageplatte vorgesehene Seitenplatte oder die beidseitig an der Auflageplatte vorgesehenen Seitenplatten am proximalen Ende des Tragarms je ein Anschlagelement aufweisen, welches mit dem Tragarm nach der Montage des Auslegers gegen das Stützelement oder gegen die Kopfplatte drehbar und dort abstützbar ist.

Durch die gelenkige Verbindung des Tragarms und der Kopfplatte resultiert ein flexibler Ausleger, der zugefaltet und aufgefaltet oder am Installationsort zusammengesetzt werden kann. Der Ausleger kann daher einfach hergestellt, raumsparend transportiert und in einfacher Weise eingesetzt werden kann. Der montierte Ausleger kann in der Folge hohe Lasten aufnehmen. Aufgrund der Flexibilität des Auslegers ist es auch vorteilhaft möglich, die Kopfplatte in das Stützelement zu integrieren.

Die Teile des Auslegers können mit einfachen Werkzeugen kostengünstig und in hoher Qualität gefertigt werden. Vorteilhaft können Ausgangsmaterialien verwendet werden, die mit einer Schutzschicht versehen sind, die bei der Bearbeitung nicht oder nicht wesentlich beschädigt wird. Beispielsweise werden Sendzimir verzinkte Metallstücke zur Herstellung der Ausleger verwendet.

Die gelenkige Verbindung kann z.B. realisiert werden, indem die einander zugewandten Enden des Auslegers und der Kopfplatte durch ein Scharniergelenk miteinander verbunden sind. Dazu können die Enden des Auslegers und der Kopfplatte mit Scharnierhülsen versehen sein, die von einer Lagerwelle durchstossen sind. Durch das Scharniergelenk können der Tragarm und die Kopfplatte fest oder lösbar miteinander verbunden sein.

In einer weiteren vorzugsweisen Ausgestaltung ist vorgesehen, dass an die Kopfplatte ein Gabelstück mit zwei voneinander beanstandeten und gegen den Tragarm gerichteten Gabelzinken anschliesst und dass die Auflageplatte an dem dem Kopfstück zugewandten proximalen Ende des Tragarms eine Haltezunge aufweist, die gegenüber der Auflageplatte vorzugsweise um etwa 90° abgewinkelt ist und die durch einen Durchlassbereich zwischen den beiden Gabelzinken des Gabelstücks hindurch derart hinter die Kopfplatte einschiebbar ist, dass die Haltezunge gegen die Rückseite der Kopfplatte drehbar ist, während ein Teil der Auflageplatte des Tragarms auf den beiden Gabelzinken ruht. Das Gabelstück wirkt somit als Gelenklager, welches das zugewandte Endstück des Tragarms drehbar hält, wobei der Tragarm durch die Haltezunge in Position gehalten wird.

In vorzugsweisen Ausgestaltungen ist die Kopfplatte des Kopfstücks des Auslegers in eine Seitenwand des Stützelements integriert.

Der Ausleger besteht somit aus zwei Vorrichtungsteilen, die in einfacher Weise separat gefertigt und anschliessend in einfacher Weise, praktisch mit einem Handgriff, formschlüssig miteinander verbunden oder gefaltet werden können.

Besonders vorteilhaft ist, dass der Tragarm des Auslegers derart mit dem Kopfstück verbunden werden kann, dass eine formschlüssige Verbindung resultiert, die vorteilhaften Krafteinwirkungen ausgesetzt ist und somit hohen Belastungen standhält. Vorteilhaft ist vorgesehen, dass im Wesentlichen Druckkräfte über den Ausleger bzw. das Kopfstück und den Tragarm direkt auf das Stützelement sowie zwischen dem Kopfstück und dem Tragarm übertragen werden. Wesentlich ist zudem, dass Kräfte über verschiedene Punkte übertragen werden, sodass die einwirkende Kraft der getragenen Last auf zahlreiche kleinere Kraftvektoren aufgeteilt wird, die zusätzlich im Wesentlichen Druckkräfte betreffen. Druckkräfte verursachen im Gegensatz zu Zugkräften kaum Verformungen des Auslegers, sodass hohe Belastungen zulässig sind und eine hohe Betriebssicherheit erreicht wird.

Der Tragarm des Auslegers bildet mit der Auflageplatte und einer damit verbundenen Seitenplatte ein L-Profil oder mit zwei Seitenplatten ein nach unten geöffnetes U-Profil. Der Tragarm mit dem nach unten geöffneten U-Profil erlaubt dabei die Aufnahme wesentlich höher Lasten, ohne dass eine Verformung eintritt.

Die Kopfplatte kann an der Rückseite eine Ausnehmung aufweisen, die es erlaubt, die Haltezunge teilweise oder vollständig aufzunehmen. Die eingesenkte Haltezunge kann mit der Rückseite der Kopfplatte daher eine bündige Fläche bilden.

Beim erfindungsgemässen Ausleger resultieren mehrere Zonen, an denen Kraftübertragungen erfolgen. Durch die Elastizität der Vorrichtungsteile des Auslegers resultiert zudem ein Lastausgleich, welcher das Auftreten von Spitzenkräften verhindert. Durch die Realisierung von mehreren Zonen der Kraftübertragung wird die Gesamtlast auf verschiedene Teilkräfte aufgeteilt, die wesentlich geringer sind als Spitzenkräfte, die bei konventionellen Auslegern auftreten. Obwohl eine formschlüssige Verbindung vorliegt, resultiert eine Festigkeit des Auslegers, die selbst bei Auslegern, die nur aus einem Stück gefertigt sind kaum erreicht wird. Durch die Elastizität des Auslegers, die minimale Bewegungen erlaubt, können Kräfte und Schläge elastisch aufgefangen werden, wodurch Materialbelastungen reduziert werden. Der erfindungsgemässe Ausleger zeigt daher auch nach langem Einsatz und erheblichen Krafteinwirkungen kaum Verschleisserscheinungen.

Unter Last werden die Anschlagelemente gegen die Kopfplatte oder gegen eine Seitenwand des Stützelements gedrückt, weshalb wesentliche Kraftanteile der Last auf diesem Wege auf das Stützelement übertragen werden. Diesbezüglich resultiert eine hohe Belastbarkeit des Auslegers. Die Seitenplatten des Tragarms können ferner durch Einformungen versteift werden, sodass nicht-elastische Verformungen vermieden werden.

Die Gabelzinken des Gabelstücks sind nach der Montage des Auslegers zwischen den Seitenplatten des Tragarms vorzugsweise spielfrei eingeschlossen. Die Haltezunge ist vorzugsweise zwischen den Gabelzinken spielfrei eingeschlossen. Es resultiert daher ein stabiles Drehgelenk, welches sicher bedient werden kann.

Die Kopfplatte umfasst vorzugsweise Montageelemente, mittels denen die Kopfplatte mit dem Stützelement formschlüssig verbindbar ist. Beispielsweise umfasst die Kopfplatte wenigstens einen Haken, der in eine Öffnung im Stützelement eingehängt werden kann. Alternativ kann die Kopfplatte auch durch eine Schraubengarnitur mit dem Stützelement verbunden werden.

Der Ausleger und das Stützelement können unabhängig voneinander bereitgestellt werden. In einer besonders bevorzugten Ausgestaltung ist das Kopfstück des Auslegers hingegen in eine Seitenwand des Stützelements integriert. Das Stützelement kann z.B. ein Vierkantrohr, ein U-Profil oder ein L-Profil sein. Durch die Integration des Kopfstücks des Auslegers in das Stützelement resultieren zahlreiche Vorteile. Ein Teil der Seitenwand des Stützelements wird als Kopfstück des Auslegers verwendet, weshalb die separate Fertigung und Montage eines Kopfstücks entfällt. Das Stützelement mit einem oder mehreren darin integrierten Kopfstücken kann praktisch ohne Mehrkosten gefertigt werden, sodass allein die einfach ausgebildeten Tragarme erforderlich sind, die an einem der integrierten Kopfstücke wahlweise in das Stützelement eingesetzt werden.

Die beiden Gabelzinken, sofern vorhanden, können aus der Seitenwand des Stützelements ausgeschnitten und ausgebogen werden. Die Durchlassbereich kann mit einer Öffnung in der Seitenwand des Stützelements realisiert werden. Dabei kann ein Schlitz in die Seitenwand des Stützelements eingearbeitet werden, dessen Querschnitt etwa dem Querschnitt der Haltezunge entspricht. Der Tragarm kann daher in gleicher Weise mit dem Stützelement verbunden werden, wie mit dem separat gefertigten Kopfstück. Die Haltezunge wird durch die Schlitzöffnung bzw. den Durchlassbereich hindurch geführt, wonach das Drehgelenk gebildet wird und der Tragarm nach unten gedreht werden kann, bis die Haltezunge an der Rückseite der Seitenwand des Stützelements anliegt.

Nachfolgend wird die Erfindung anhand von Zeichnungen näher erläutert. Dabei zeigt:
- Fig. 1: eine bekannte Montagevorrichtung mit einem Stützelement 2 in der Ausgestaltung einer Deckenstütze und einem daran befestigten Ausleger 1', der ein mit dem Stützelement 2 verschraubtes Kopfstück 12' und einen damit verbundenen Tragarm 11' aufweist, auf dem eine Kabelbahn 3 ruht;
- Fig. 2a: eine erfindungsgemässe Montagevorrichtung 10 mit dem Stützelement 2 von Fig. 1 und mit einem erfindungsgemässen Ausleger 1, der ein mit dem Stützelement 2 verbundenes Kopfstück 12 und einen Tragarm 11 aufweist, der mit dem Kopfstück 12 formschlüssig und gelenkig verbindbar ist;
- Fig. 2b: das Stützelement 2 und Ausleger 1 von Fig. 2a in Schnittdarstellung;
- Fig. 3a: das Stützelement 2 und den Ausleger 1 von Fig. 2b während des Vorgangs des Einhängens des Tragarms 11 an dem mit dem Stützelement 2 verbundenen Kopfstück 12;
- Fig. 3b: das Stützelement 2 und den Ausleger 1 von Fig. 3a nach dem Einhängen des Tragarms 11;
- Fig. 4a: den mit einer Seitenwand 29 des in Schnittdarstellung gezeigten Stützelements 2 verbundenen Ausleger 1 von Fig. 3b von der Rückseite;
- Fig. 4b: den Ausleger 1 von Fig. 4a von unten;
- Fig. 5: eine erfindungsgemässe Montagevorrichtung 10 in Schnittdarstellung mit einem Stützelement 2, in welches das Kopfstück 212 des Auslegers 1 integriert ist; und
- Fig. 6: einen erfindungsgemässen Ausleger 1, mit einem Tragarm 11 und einem Kopfstück 12, die durch ein Scharniergelenk 1112 miteinander verbunden sind.

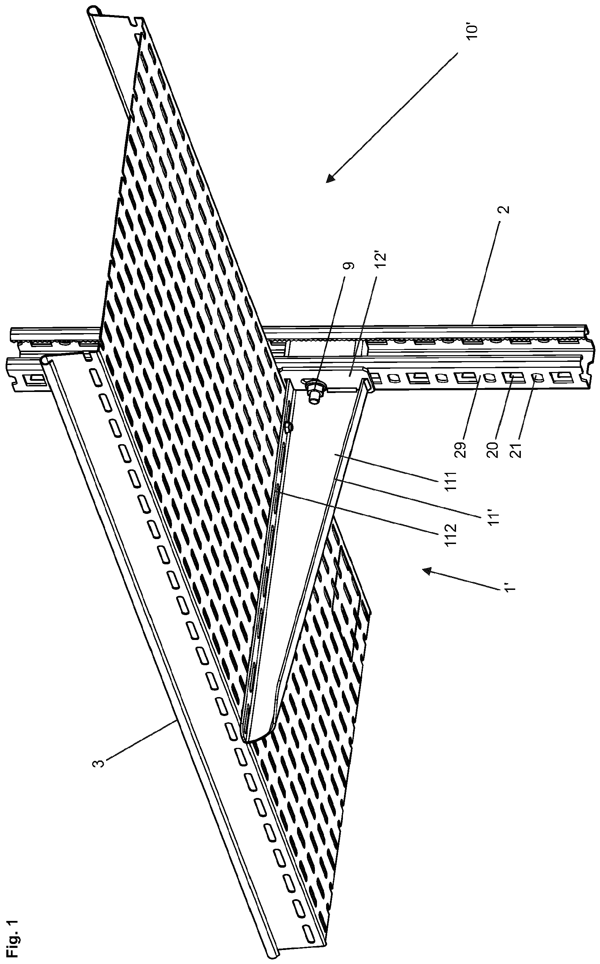

Fig. 1 zeigt eine Montagevorrichtung 10' mit einer z.B. an einem Decke montierten Stützelement 2 und einem daran montierten Ausleger 1', welcher eine Kabelbahn 3 trägt. Der Ausleger 1' umfasst ein Kopfstück 12' und einen Tragarm 11' die fest miteinander verbunden sind. Das Stützelement 2 ist beispielsweise eine Deckenstütze mit einem U-Profil mit drei Seitenwänden 29, die unterschiedliche Lochungen, quadratische Fensteröffnungen 20 und Längslochungen 21, in einem regelmässigen Raster aufweisen.

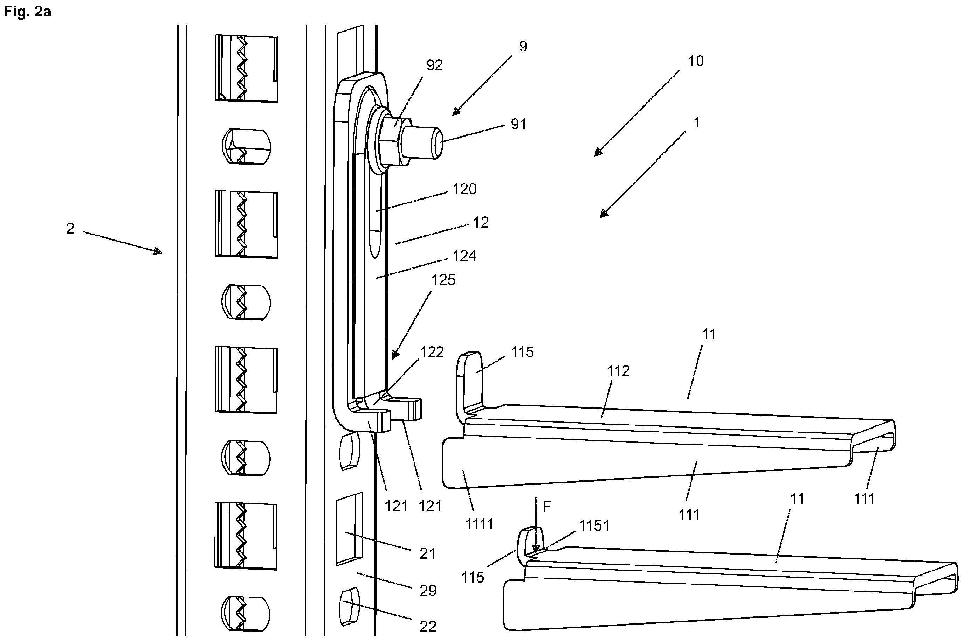

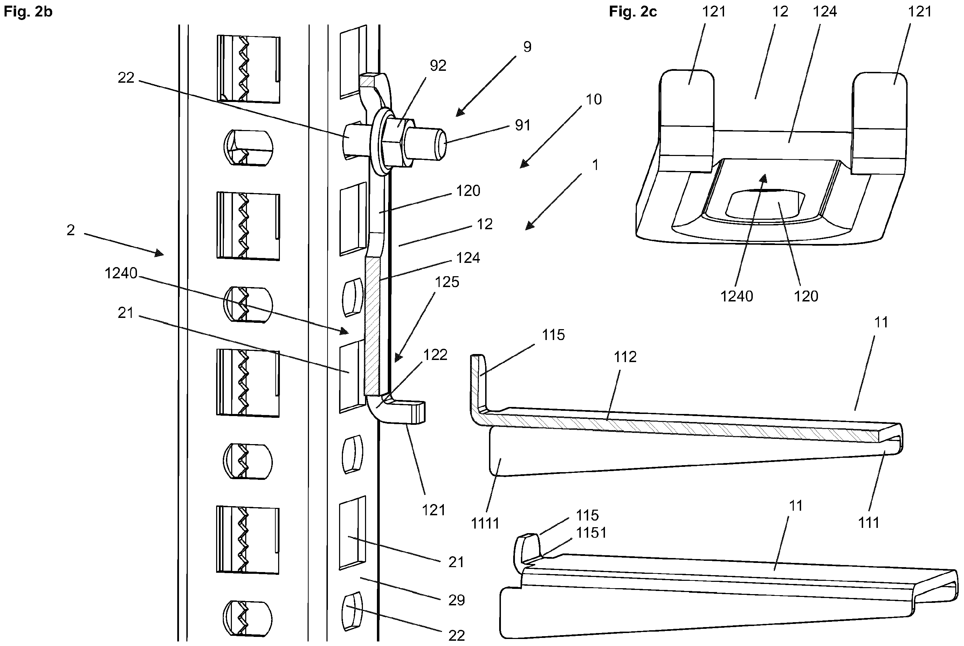

Fig. 2a zeigt eine erfindungsgemässe Montagevorrichtung 10 mit einem Stützelement 2 gemäss Fig. 1 und einem erfindungsgemässen Ausleger 1, der ein mit dem Stützelement 2 verbundenes Kopfstück 12 und einen Tragarm 11 aufweist, der mit dem Kopfstück 12 formschlüssig verbindbar ist. Der Tragarm 11 ist in zwei verschiedenen Ausgestaltungen gezeigt.

In beiden Ausgestaltungen weist der Tragarm 11 ein nach unten geöffnetes U-Profil mit einer Auflageplatte 112 und zwei seitlich daran vorgesehene und um rund 90° nach oben dagegen abgewinkelte Seitenplatten 111 auf.

Die Auflageplatte 112 weist an dem dem Kopfstück 12 zugewandten proximalen Ende des Tragarms 11 eine Haltezunge 115 auf, die mit der Auflageplatte 112 des Tragarms 11 einen Winkel von 90° oder etwas weniger als 90° einschliesst.

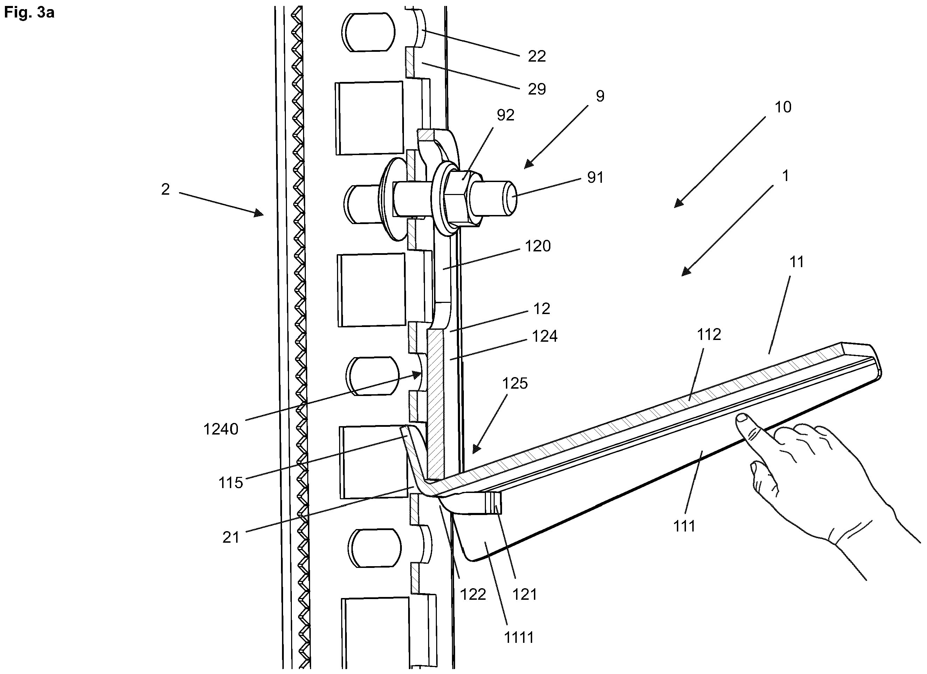

In der ersten Ausgestaltung (oben gezeigt) des Tragarms 11 weist dieser eine längere Haltezunge 115 auf, als in der zweiten Ausgestaltung (unten gezeigt). Die Bedeutung dieses Unterschieds wird nachstehend mit Bezug auf Fig. 3a beschrieben

Das Kopfstück 12 umfasst eine Kopfplatte 124 mit einer Montageöffnung 120, durch die eine Verbindungsschraube 91 einer Schraubengarnitur 9 hindurch geführt ist, die in einer Längslochung 22 einer Seitenwand 29 des Stützelements 2 gehalten ist. Durch Festziehen einer Schraubenmutter 92 wird die Kopfplatte 124 an der Seitenwand 29 des Stützelements 2 fixiert.

An die Unterseite der Kopfplatte 124 ist ein Gabelstück 125 mit zwei voneinander beanstandeten und gegen den Tragarm 11 gerichteten Gabelzinken 121 vorgesehen, die einen Durchlassbereich 122 begrenzen.

Die Haltezunge 115, die nach oben abgewinkelt ist, ist durch den Durchlassbereich 122 zwischen den beiden Gabelzinken 121 des Gabelstücks 125 hindurch hinter die Kopfplatte 124 derart einschiebbar, dass die Haltezunge 115 gegen die Rückseite der Kopfplatte 124 drehbar ist, während ein Teil der Auflageplatte 112 des Tragarms 11 auf den beiden Gabelzinken 121 ruht. Die beiden Gabelzinken 121 dienen daher als Gelenklager, auf das die Auflageplatte 112 abgestützt und anschliessend, gehalten von der Haltezunge 115, gedreht werden kann, bis die Seitenplatten 111 des Tragarms 11 an das Stützelement 2 anstossen.

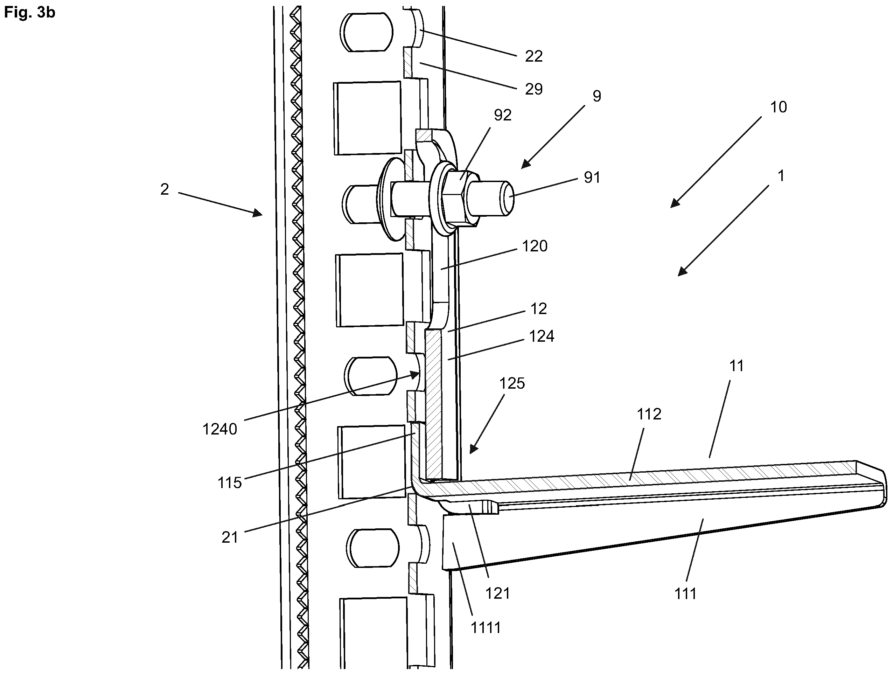

Die Seitenplatten 111 weisen gegen das Kopfstück 12 bzw. gegen die Seitenwand 29 des Stützprofils 2 gerichtete Anschlagelemente 1111 auf, die den Drehwinkel des Tragarms 11 beschränken und den installierten Tragarm 11 in horizontaler Ausrichtung halten. Die einander zugewandten und miteinander verbundenen Enden des Tragarms 11 und des Kopfstücks 12 bilden daher ein einfach ausgestaltetes Drehgelenk. Die Gelenkfunktion ist in den Figuren 3a und 3b ersichtlich.

Fig. 2b zeigt das Stützelement 2 und den Ausleger 1 von Fig. 2a in Schnittdarstellung. Es ist ersichtlich, dass die Verbindungsschraube 91 eine der Längslochungen 22 der zugeordneten Seitenwand 29 des Stützelements 2 durchstösst. Ferner ist gezeigt, dass hinter dem Gabelstück 125 eine Fensteröffnung 21 in der Seitenwand 29 des Stützelements 2 vorgesehen ist. Diese Fensteröffnung 41 erlaubt es, die Haltezunge 115 des Tragarms 11 einzuführen und gegen die Kopfplatte 124 des Kopfstücks 12 zu drehen. Erfindungsgemässe Ausleger 1 sind daher vorzugsweise an die Stützelemente 2 angepasst oder verwenden Stützelemente 2, welche die Bewegung der Haltezunge 115 nicht behindern.

Fig. 3a zeigt das Stützelement 2 in Schnittdarstellung und den Ausleger 1 von Fig. 2b während des Vorgangs des Einhängens des Tragarms 11 an dem mit dem Stützelement 2 verbundenen Kopfstück 12.

Es ist ersichtlich, dass das dem Kopfstück 12 zugewandte proximale Ende der Auflageplatte 112 des Tragarms 11 auf den Gabelzinken 121 ruht und die Haltezunge 115 durch den dazwischenliegenden Durchlassbereich 122 hindurch geführt wurde und nun gegen die Rückseite der Kopfplatte 124 gedreht wird.

Das an die Kopfplatte 124 anschliessende Gabelstück 125 und das zugewandte proximale Endstück des Tragarms 11 bilden somit ein Drehgelenk, welches erlaubt, den Tragarm 11 zu drehen, bis die Haltezunge 115 an die Rückseite der Kopfplatte 124 anschlägt, die Unterseite der Auflageplatte 112 an die Oberseite der Kabelzinken 121 anschlägt, die Oberseite der Auflageplatte 112 zwischen den Gabelzinken 121 an die Unterseite der Kopfplatte 124 anschlägt und die Anschlagelemente 1111 der Seitenplatten 111 des Tragarms 11 an die zugewandte Seitenwand 29 des Stützelements 2 anschlagen, wie dies in Fig. 3b gezeigt ist.

Die von einer Last, z.B. der in Fig. 1 gezeigten Kabelbahn, einwirkenden Kräfte werden daher einerseits über verschiedene Kontaktzonen zwischen dem Tragarm 11 und dem Kopfstück 12 und andererseits dem Tragarm 11 und der Seitenwand 29 des Stützelements 2 übertragen. Durch die Elastizität insbesondere der Haltezunge 115 resultiert ein idealer Kraftausgleich, sodass sich die Gesamtlast bzw. die Gesamtkraft auf verschiedene Kraftvektoren aufteilt. Der Winkel, den die Haltezunge 115 und die Auflageplatte 112 des Tragarms einschliessen, ist daher vorzugsweise um wenige Grad, z.B. 1° bis 5°, kleiner gewählt als 90°. Unter der Last wird die Haltezunge 115 zurückgebogen, bis die Anschlagelemente 1111 der Seitenplatten 111 an der Seitenwand 29 des Stützelements 2 auftreffen und sich die Kräfte gleichmässig aufteilen.

Es ist ersichtlich, dass die Haltezunge 115 in eine Fensteröffnung 21 des Stützelements 2 eingreift. Die Fensteröffnungen 21 müssen daher entsprechend dimensioniert und in einem entsprechenden Raster angeordnet werden. Durch die Verwendung des Tragarms 11 von Fig. 2a, der mit der kürzeren Haltezunge 115 versehen ist, kann auf die Verwendung von passend vorgesehenen Fensteröffnungen 21 ganz oder teilweise verzichtet werden. Die Haltezunge 115 kann allein an der Kopfplatte 125 eingehängt und an deren Rückseite in eine Ausnehmung 1240 eingeschränkt werden. Ein wesentlicher Kraftwerktor F kann daher vertikal nach unten auf den Ansatz 1151 der Haltezunge 115 einwirken. Es erfolgt daher wiederum eine Belastung auf Druck und nicht auf Zug, weshalb hohe Lasten aufgenommen werden können.

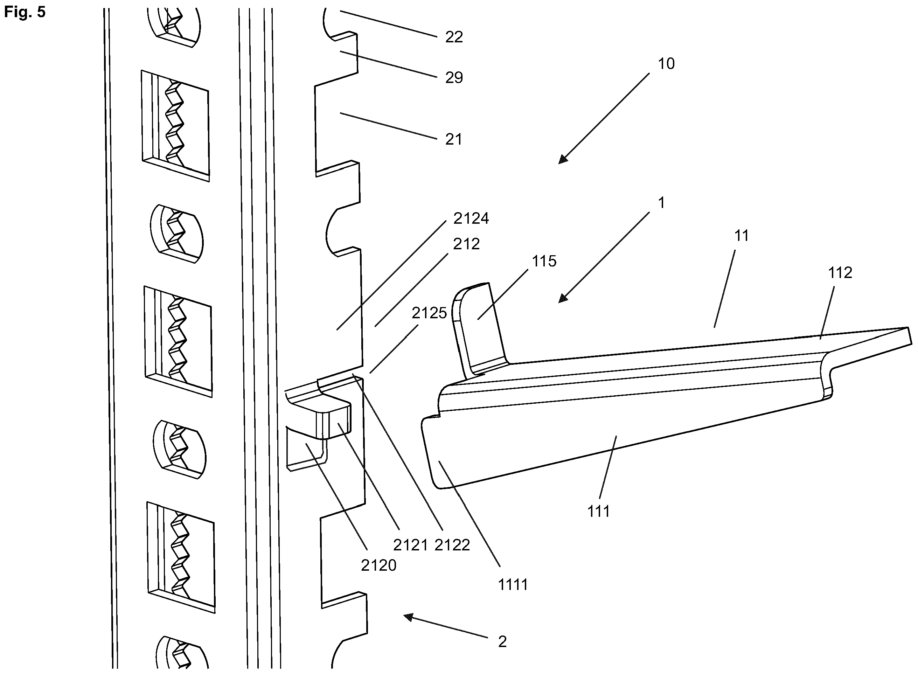

Die Ausnehmung 1240 kann in allen Ausgestaltungen des Kopfstücks 12, 212 (siehe Fig. 5) vorgesehen sein. Das Kopfstück 12, 212 kann entsprechend gebogen sein oder einen entsprechenden Verlauf der Wanddicke aufweisen.

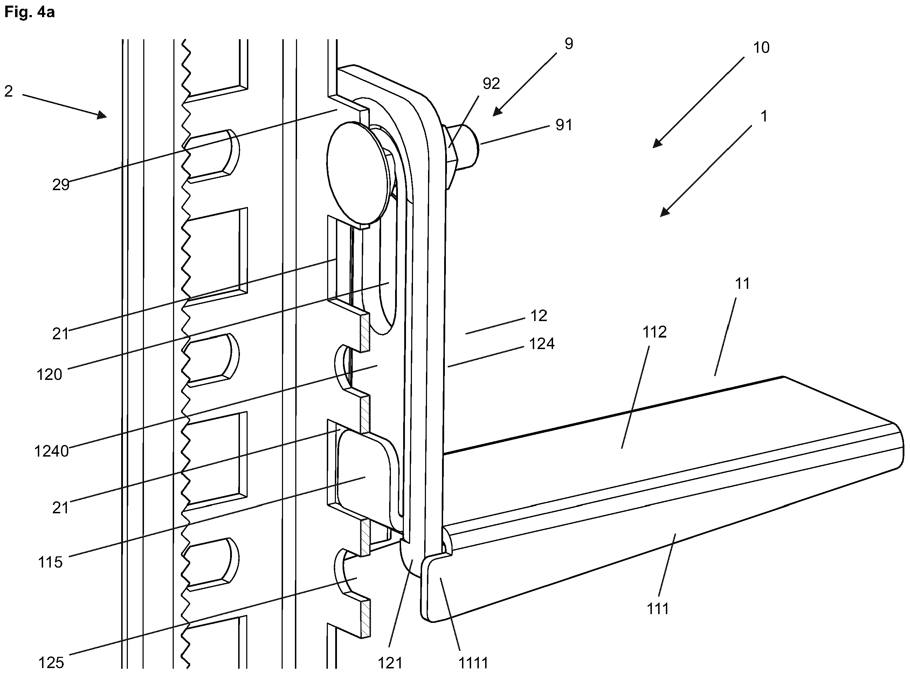

Fig. 4a zeigt den mit einer Seitenwand 29 des Stützelements 2 verbundenen Ausleger 1 von Fig. 3b von der Rückseite.

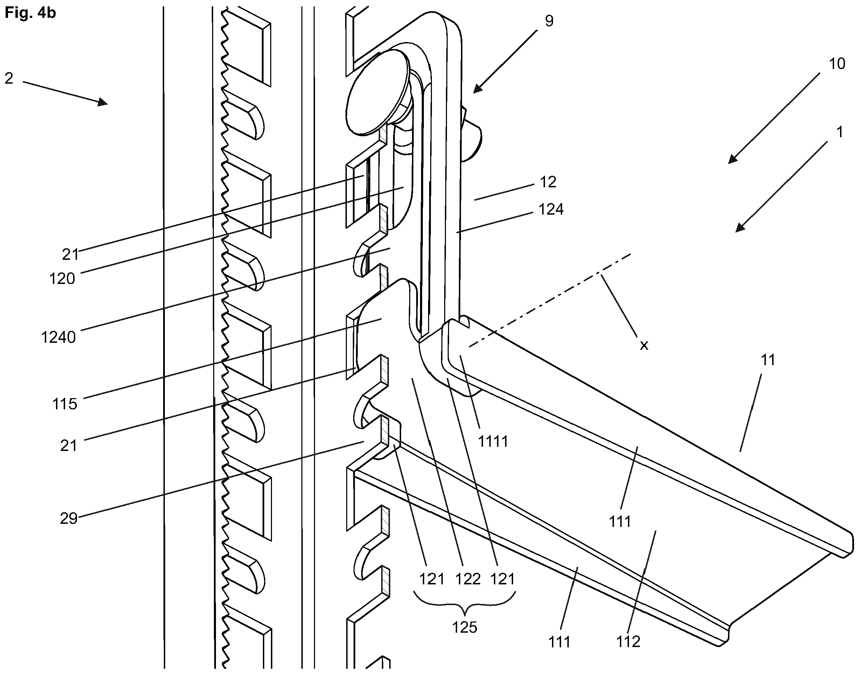

Fig. 4b zeigt den Ausleger 1 von Fig. 4a von unten. Eingezeichnet ist die Drehachse x, um die der auf dem Gabelstück 125 ruhende Tragarm 11 gedreht wurde, bis die Haltezunge 115 an der Rückseite der Kopfplatte 124 angeschlagen ist.

Fig. 5 zeigt eine erfindungsgemässe Montagevorrichtung 10 in Schnittdarstellung mit einem Stützelement 2, in welches das Kopfstück 212 des Auslegers 1 integriert ist. Den in Fig. 2a bis Fig. 4b verwendeten Bezugszeichen des Kopfstücks 12 wurde das Bezugszeichen des Stützelements 2 vorangestellt. In dieser Ausgestaltung der Montagevorrichtung 10 wird die Kopfplatte 2124 des Kopfstücks 212 wird somit durch die Seitenwand 29 des Stützelements 2 gebildet. An der Unterseite der Kopfplatte 2124 ist wiederum ein Gabelstück 2125 vorgesehen, welches zwei Kabelzinken 2121 und den dazwischenliegenden Durchlassbereich 2122 umfasst, der sich durch eine Schlitzöffnung in der Seitenwand 29 des Stützelements 2 erstreckt. Die Kabelzinken 2121 sind aus der Seitenwand 29 ausgeschnitten und um 90° nach oben gebogen. Nach dem Ausschneiden der Gabelzinken 2121 verbleiben entsprechende Öffnungen 2120 in der Seitenwand 29.

Der Ausleger 1, der unverändert dem Ausleger von Fig. 4b entspricht, kann in gleicher Weise mit dem Kopfstück 212 verbunden werden, wie dies für die anderen Ausführungsbeispiele beschrieben wurde. Die Haltezunge 115 wird durch den Durchlassbereich 2122 des Gabelstücks 2125 und die Schlitzöffnung in der Seitenwand 29 hindurch geführt. Die Auflageplatte 112 des Tragarms 11 ruht in der Folge auf den Gabelzinken 2121, wodurch wiederum das Drehgelenk gebildet wird, welches erlaubt, den Tragarm 11 nach unten in die horizontale Ausrichtung zu drehen, bis die Haltezunge 115 an der Innenseite der Halteplatte 2124 anschlägt und die Anschlagelemente 1111 der Seitenplatten 111 des Tragarms 11 an der Seitenwand 29 des Stützelements 2 anschlagen. Das Kopfstück 212 des Auslegers 1 konnte somit mit minimalem Aufwand in das Stützelement integriert werden. Vorzugsweise werden Kopfstücke 212 in einem regelmässigen Raster in das Stützelement 2 integriert, sodass einer oder mehrere Ausleger 1 wahlweise an geeigneten Positionen mit dem Stützelement 2 z.B. einer Deckenstütze verbunden werden können. Selbstverständlich ist es auch möglich, mehrere Ausleger 1 an verschiedenen Seiten 29 des Stützelements 2 zu installieren.

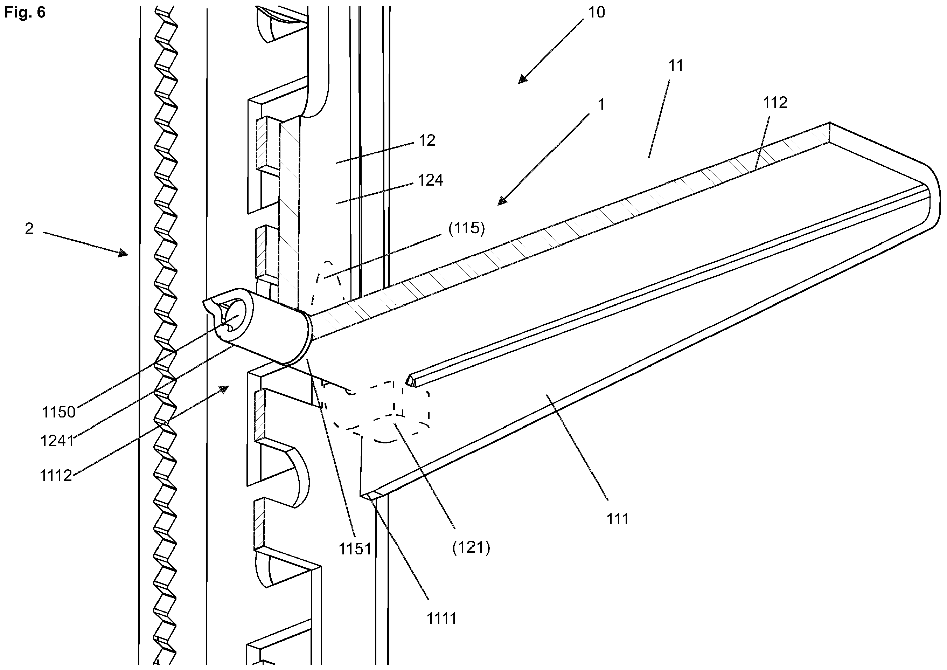

Fig. 6 zeigt einen erfindungsgemässen Ausleger 1, mit einem Tragarm 11 und einem Kopfstück 12, die durch ein Scharniergelenk 1112 miteinander verbunden sind. Der Tragarm 11 und das Kopfstück 12 weisen an den einander zugewandten Enden Gelenkhülsen 1151, 1241 auf, die von einer Gelenkwelle 1150 durchstossen sind, wodurch ein Scharniergelenk gebildet wird. Der Tragarm 11 kann daher gegen das Kopfstück 12 und, wie gezeigt, zurück in die horizontale Ausrichtung gedreht werden, in der die Anschlagelemente 1111 der Seitenstücke 111 an der Frontseite des Stützelements 2 oder an einem verlängerten Teil des Kopfstücks 12 bzw. der Kopfplatte 124 anschlagen. Die Gabelzinken 121 und/oder die Haltezunge 115 können in dieser Ausgestaltung entfallen oder hilfsweise vorgesehen werden, um den Tragarm 11 weiter zu stützen. Durch die Gabelzinken 121 und/oder die Haltezunge 115 (strichpunktiert gezeigt) kann das Gelenk hingegen entlastet werden, indem die einwirkenden Kräfte vorteilhaft auf mehrere Vorrichtungsteile verteilt werden.

Die Seitenplatten 111 weisen gegen das Kopfstück 12 bzw. gegen die Seitenwand 29 des Stützprofils 2 gerichtete Anschlagelemente 1111 auf, die den Drehwinkel des Tragarms 11 beschränken und den installierten Tragarm 11 in horizontaler Ausrichtung halten. Die Anschlagelemente 1111 können somit am Stützprofil 2 oder an der entsprechend verlängerten Kopfplatte 124 des Kopfstücks 12 anliegen.

### Literaturverzeichnis

[1] EP1155638A1
[2] EP2290772A1
[3] EP1804354A2

## Patentansprüche

1. Ausleger (1) zur Verbindung mit einem Stützelement (2) mit einem Tragarm (11), der eine Auflageplatte (112) aufweist, an die an einer oder beiden Seiten eine abgewinkelte Seitenplatte (111) anschliesst, und mit einem Kopfstück (12), das eine Kopfplatte (124) umfasst, die eine dem Tragarm (11) zugewandte Frontseite und eine von Tragarm (111) abgewandte Rückseite aufweist, **dadurch gekennzeichnet, dass** das Kopfstück (12) und der Tragarm (11) an den einander zugewandten Enden erste und zweite Gelenkelemente (115; 1150 bzw. 121; 1241) aufweisen, welche zur Bildung eines Drehgelenks miteinander verbunden oder miteinander verbindbar sind, sodass der Tragarm (11) gegenüber dem Kopfstück (12) drehbar ist und dass die einseitig an der Auflageplatte (112) vorgesehene Seitenplatte (111) oder die beidseitig an der Auflageplatte (112) vorgesehenen Seitenplatten (111) an dem dem Kopfstück (12) zugewandten proximalen Ende des Tragarms (11) je ein Anschlagelement (1111) aufweisen, welches mit dem Tragarm (11) nach der Montage des Auslegers (1) gegen das Stützelement (2) oder gegen die Kopfplatte (124) drehbar und dort abstützbar ist.

2. Ausleger (1) nach Anspruch 1, **dadurch gekennzeichnet, dass** an die Kopfplatte (124) ein Gabelstück (125) mit zwei voneinander beanstandeten und gegen den Tragarm (111) gerichteten Gabelzinken (121), die die ersten Gelenkelemente bilden, anschliesst und dass die Auflageplatte (112) am proximalen Ende des Tragarms (11) eine Haltezunge (115) aufweist, die ein zweites Gelenkelement bildet und die gegenüber der Auflageplatte (112) vorzugsweise um etwa 90° abgewinkelt ist und die durch einen Durchlassbereich (122) zwischen den beiden Gabelzinken (121) des Gabelstücks (125) hindurch derart hinter die Kopfplatte (124) einschiebbar ist, dass die Haltezunge (115) gegen die Rückseite der Kopfplatte (124) drehbar ist, während die Auflageplatte (112) des Tragarms (11) gegen die Gabelzinken (121) gedreht wird.

3. Ausleger (1) nach Anspruch 1 oder 2, **dadurch gekennzeichnet, dass** die ersten und zweiten Gelenkelemente (1150; 1241) ein Scharniergelenk bilden und vorzugsweise eine Gelenkwelle (1150) und ein Wellenlager (1241) umfassen.

4. Ausleger (1) nach Anspruch 1, 2 oder 3, **dadurch gekennzeichnet, dass** der Tragarm (11) mit der Auflageplatte (112) und der damit verbundenen Seitenplatte (111) ein L-Profil bildet oder dass der Tragarm (11) mit der Auflageplatte (112) und den beidseitig verbundenen Seitenplatten (111) ein U-Profil bildet.

5. Ausleger (1) nach einem der Ansprüche 1 - 4, **dadurch gekennzeichnet, dass** die Gabelzinken (121) des Gabelstücks (125) nach der Montage des Auslegers (1) zwischen den Seitenplatten (111) des Tragarms (11) annähernd spielfrei eingeschlossen sind und/oder dass die Haltezunge (115) zwischen den Gabelzinken (121) annähernd spielfrei eingeschlossen ist.

6. Ausleger (1) nach einem der Ansprüche 1 - 5, **dadurch gekennzeichnet, dass** sich die Kopfplatte (12) des Kopfstücks in eine Richtung nach oben und die Seitenplatten (111) des Tragarms (11) in die entgegengesetzte Richtung nach unten erstrecken.

7. Ausleger (1) nach einem der Ansprüche 1 - 6, **dadurch gekennzeichnet, dass** die Kopfplatte (12) Montageelemente, wie Haken, aufweist, mittels denen die Kopfplatte (12) mit dem Stützelement (2) formschlüssig verbindbar ist und/oder dass die Kopfplatte (12) durch eine Schraubengarnitur (9; 91, 92) mit dem Stützelement (2) verbindbar ist.

8. Ausleger (1) nach einem der Ansprüche 1 - 7, **dadurch gekennzeichnet, dass** die Kopfplatte (124) auf der Rückseite eine Ausnehmung (1240) aufweist, in die die Haltezunge (115) teilweise oder vollständig einsenkbar ist.

9. Ausleger (1) nach einem der Ansprüche 1 - 8, **dadurch gekennzeichnet, dass** das Gabelstück (125) der Kopfplatte (124) und das proximale Endstück des Tragarms (11) mit der Haltezunge (125) ein Drehgelenk mit einer Drehachse (x) bilden, um die der Tragarm (11) gegenüber dem Kopfstück (12) bis zu einem Anschlag drehbar ist, der durch die Haltezunge (115), welche an der Rückseite der Kopfplatte (124) anstösst, gegebenenfalls durch die Auflageplatte (112), die von unten an die Kopfplatte (124) anstösst, und die Gabelzinken (121) des Gabelstücks (125), die an die Unterseite der Auflageplatte (112) des Tragarms (11) anstossen, gebildet wird.

10. Ausleger (1) nach einem der Ansprüche 1 - 9, **dadurch gekennzeichnet, dass** die Kopfplatte (124) des Kopfstücks (12) in eine Seitenwand (29) des Stützelements (2) integriert ist, sodass das Stützelement (2) einen Teil des Auslegers (1) bildet.

11. Montagevorrichtung (10) mit einem Ausleger (1), der einen Tragarm (11) und ein Kopfstück (12) umfasst, nach einem der Ansprüche 1-10, der mit einem Stützelement (2), wie einer Deckenstütze, verbunden ist, wobei das Kopfstück (12) und der Tragarm (11) an den einander zugewandten Enden erste und zweite Gelenkelemente (115; 1150 bzw. 121; 1241) aufweisen, welche zur Bildung eines Drehgelenks miteinander verbunden oder miteinander verbindbar sind, sodass der Tragarm (11) gegenüber dem Kopfstück (12) drehbar ist und dass eine einseitig an der Auflageplatte (112) vorgesehene Seitenplatte (111) oder beidseitig an der Auflageplatte (112) vorgesehene Seitenplatten (111) an dem dem Kopfstück (12) zugewandten proximalen Ende des Tragarms (11) je ein Anschlagelement (1111) aufweisen, welches mit dem Tragarm (11) nach der Montage des Auslegers (1) gegen das Stützelement (2) oder gegen die Kopfplatte (124) drehbar und dort abstützbar ist.

12. Montagevorrichtung (10) nach Anspruch 11, **dadurch gekennzeichnet, dass** der Ausleger (1) einen Tragarm (11), der wenigstens eine Auflageplatte (112) aufweist, an die an einer oder beiden Seiten eine abgewinkelte Seitenplatte (111) anschliesst, und ein Kopfstück (12; 212) mit einer Kopfplatte (124; 2124) umfasst, an die ein Gabelstück (125; 2125) mit zwei voneinander beanstandeten und gegen den Tragarm (111) gerichteten Gabelzinken (121; 2121) anschliesst und dass die Auflageplatte (112) an dem dem Kopfstück (12; 212) zugewandten proximalen Ende des Tragarms (11) eine Haltezunge (115) aufweist, die gegenüber der Auflageplatte (112) vorzugsweise etwa um 90° abgewinkelt ist und die durch einen Durchlassbereich (122; 2122) zwischen den beiden Gabelzinken (121; 2121) des Gabelstücks (125) hindurch derart hinter die Kopfplatte (124; 2124) einschiebbar ist, dass die montierte Haltezunge (115) an der Rückseite der Kopfplatte (124; 2124) anliegt und die Auflageplatte (112) des Tragarms (11) auf den beiden Gabelzinken (121; 2121) ruht.

13. Montagevorrichtung (100) nach Anspruch 11 oder 12, **dadurch gekennzeichnet, dass** das Kopfstück (12) formschlüssig oder durch eine Schraubengarnitur (9) mit dem Stützelement (2) verbunden oder verbindbar ist oder das die Kopfplatte (2124) des Kopfstücks (212) in eine Seitenwand (29) des Stützelements (2) integriert ist.

14. Montagevorrichtung (100) nach Anspruch 13, **dadurch gekennzeichnet, dass** die beiden Gabelzinken (2121) aus der Seitenwand (29) des Stützelements (2) ausgeschnitten und ausgebogen sind und/oder das der Durchlassbereich (2122) eine Öffnung in der Seitenwand (29) des Stützelements (2) bildet.

15. Montagevorrichtung (100) nach einem der Ansprüche 11-14, **dadurch gekennzeichnet, dass** in der Seitenwand (29) des Stützelements (2) Öffnungen (21) vorgesehen sind, die es erlauben, die Haltezunge (115) gegen die Halteplatte (124) zu drehen.
